# EUROPEAN PATENT SPECIFICATION

(11) **EP 0 549 540 B1**
(45) Date of publication and mention of the grant of the patent: **11.09.1996**
(21) Application number: 92830631.5
(22) Date of filing: 20.11.1992
(51) Int. Cl.: F16H 3/38, F16H 63/30

(54) **A motor-vehicle gearbox with permanently meshed gears**
Fahrzeuggetriebe mit ständig im Eingriff stehenden Zahnrädern
Boîte de vitesse de véhicule avec engrenages constamment en prise

(30) Priority: 23.12.1991 IT TO911028
(43) Date of publication of application: 30.06.1993
(73) Proprietor: FIAT AUTO S.p.A., I-10135 Torino (IT)
(72) Inventor: Ghione, Ferruccio, I-10135 Torino (IT)
(74) Representative: Bosotti, Luciano

(56) References cited:
- EP-A- 0 022 411
- EP-A- 0 299 930
- FR-A- 2 299 562
- GB-A- 2 059 522

## Description

The present invention relates in general to a motor-vehicle gearbox of the type including a main shaft and a layshaft which carry respective permanently meshed gears, of which those carried by the layshaft can be made fast for rotation therewith by means of respective slidable engagement sleeves, and a reverse-gear shaft carrying an idle reverse gear which is slidable in order to mesh for rotation with a pinion carried by the main shaft and with a ring gear carried by one of the engagement sleeves on the layshaft, in order to engage the reverse gear (see e.g. EP-A-299130).

In gearboxes of this type, the engagement sleeve which is slidable on the layshaft and carries the ring gear for cooperating with the idle reverse gear is generally that which cooperates with the first and second gears (or with the third and fourth gears). When the gearbox is in the neutral condition, the axial position of the idle reverse gear is such that it is disengaged both from the pinion on the main shaft and from the ring gear on the engagement sleeve on the layshaft. When the reverse gear is engaged, the idle gear is moved axially so as to mesh with the pinion on the main shaft and with the ring gear on the engagement sleeve on the layshaft. This meshing takes place frontally and may give rise to noise or even sticking because the three, toothed members are not synchronised, that is, they are not normally rotating at the same speed. In particular, the main shaft may still be rotating by inertia or may be entrained by the clutch which has not been correctly disengaged by the driver of the vehicle in which the gearbox is installed, and the layshaft may rotate in the opposite sense to the main shaft, since it is connected to the wheels of the vehicle which may not yet have stopped completely when reverse gear is engaged.

Synchronising devices which have been proposed for solving this problem are constituted, for example, by systems for braking the main shaft or by synchronising devices associated with the reverse gear shaft. These solutions involve structural complications as well as increasing the size of the gearbox and cannot always ensure total synchronisation in all possible operative situations of the gearbox and of the vehicle in which it is installed.

The object of the present invention is to prevent the aforementioned problem,and this object is achieved by virtue of the fact that the toothed engagement sleeve on the layshaft carries adjacent the ring gear a second ring gear with which the idle reverse gear can mesh and which is arranged such that the idle reverse gear is constantly coupled for rotation with the layshaft, through one of said ring gears.

By virtue of this concept, the speed of rotation of the idle reverse gear is always equal to that of the layshaft as a result of its meshing with one or other of the ring gears on the engagement sleeve. This reduces both the meshing noise and the risk of sticking when the reverse gear is engaged, since the only possible remaining discrepancy of synchronisation in any operative situation of the gearbox is that between the idle reverse gear and the main shaft.

The invention will now be described in detail with reference to the appended drawings, provided purely by way of non-limiting example, in which:
Figure 1 is a schematic, false, longitudinal sectional view of a portion of a gearbox according to the invention, shown in a first operative configuration, and
Figures 2, 3 and 4 are views similar to Figure 1 in which the gearbox is shown in three different operative conditions.

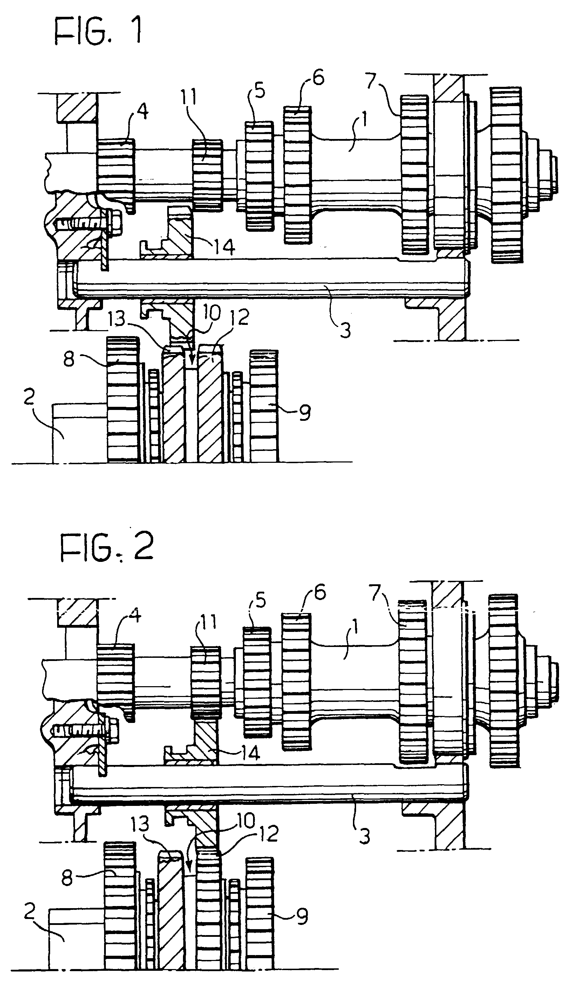

With reference initially to Figure 1, the main shaft of a motor-vehicle gearbox with permanently meshed gears is indicated 1, a portion of the layshaft is indicated 2, and a reverse gear shaft interposed between them is indicated 3.

The main shaft 1, which receives the drive from the engine of the vehicle in known manner by means of a friction clutch, has a gear 4 for the first ratio, a gear 5 for the second ratio, a gear 6 for the third ratio and a gear 7 for the fourth ratio. The gears 4-7 are permanently meshed with corresponding gears on the layshaft 2, and only those relating to the first ratio (which is meshed with the gear 4) and to the second ratio (which is meshed with the gear 5) are indicated 8 and 9 respectively.

The gears 8 and 9 are idle on the layshaft 2 and can selectively be made fast for rotation therewith by means of a slidable engagement sleeve 10 with respective teeth and synchronising devices which are of known type and for brevity are therefore not described in detail. The movement of the engagement sleeve 10 towards the left, with reference to the drawings, causes the drive to be transmitted from the main shaft 1 to the layshaft 2 by means of the first-ratio gears 4 and 8, and its movement to the right causes the drive to be transmitted by means of the two second-ratio gears 5 and 9.

Between the gears 4 and 5, the main shaft 1 has a reverse gear pinion, indicated 11, in alignment with a first external ring gear 12 at one end of the engagement sleeve 10. The drive is transmitted between the pinion 11 and the ring gear 12 by means of an idle reverse gear 14 which is slidable on the reverse gear shaft 3. The idle gear 14 is made to slide axially, in known manner, by means of a fork not shown.

A second ring gear adjacent the first ring gear 12 at the other end of the sleeve 10 is indicated 13. The two rings 12 and 13 have the same diameter and, as will become clear from the following, can constantly make the idle gear 14 fast for rotation with the layshaft 2 in all of the possible operative conditions of the gearbox.

The condition shown in Figure 1 corresponds to the neutral position of the gearbox; in this condition, the engagement sleeve 10 is in a central position between the gears 8 and 9 and the idle gear 14 is in the rest position, that is, it is offset sideways towards the left of the pinion 11 and of the first ring gear 12, with reference to the drawing. It is meshed with the second ring gear 13, however, and is thus synchronised with the layshaft 2 by means of the engagement sleeve 10.

In the condition shown in Figure 2, in which the reverse gear is engaged, the idle gear 14 is moved towards the right, with reference to the drawing, from its idle position of Figure 1 and is meshed with the pinion 11 on one side and with the first ring gear 12 of the sleeve 10 on the other side.

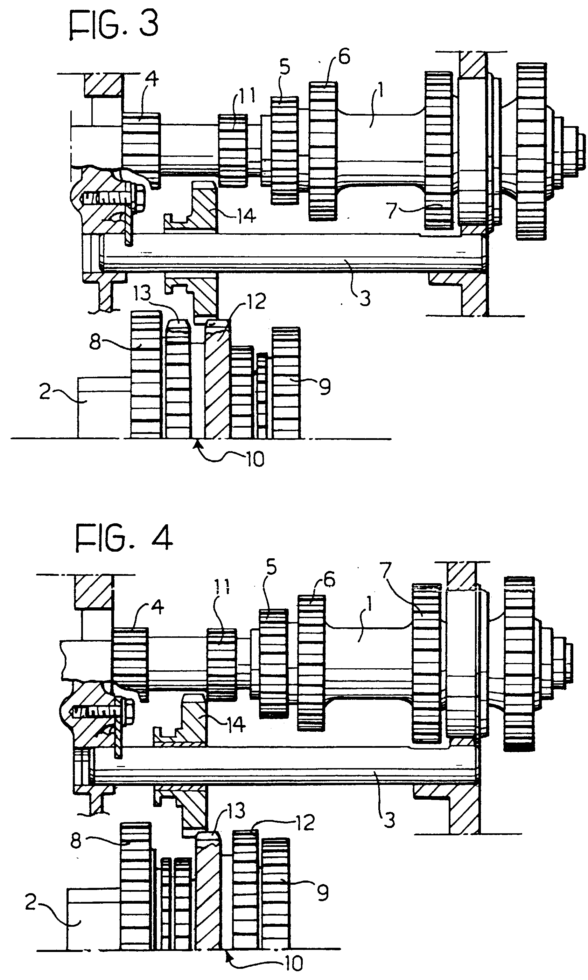

In the condition shown in Figure 3, in which the first gear is engaged, the idle gear 14 is kept in the inoperative position of Figure 1, and the engagement sleeve 10 is moved to the left, with reference to the drawing, making the gear 8 fast for rotation with the layshaft 2. The idle gear 14 is also fast for rotation with the layshaft 2 because it is meshed with the first ring gear 12 on the engagement sleeve 10.

In the condition shown in Figure 4, in which the second gear is engaged, the engagement sleeve 10 is moved to the right, with reference to the drawing, and makes the gear 9 fast for rotation with the layshaft 2. The idle gear 14 is still coupled for rotation with the layshaft 2 because it is meshed with the second ring 13 on the sleeve 10.

In the conditions in which the other gear ratios of the gearbox are engaged, the arrangement of the engagement sleeve 10 and of the idle gear 14 correspond to those of Figure 1; the idle gear 14 is thus constantly made fast for rotation with the layshaft 2 in all of the operative configurations of the gearbox.

Naturally, the details of construction and forms of embodiment may be varied widely with respect to those described and illustrated, without thereby departing from the scope of the present invention.

## Claims

1. A motor-vehicle gearbox including a main shaft (1) and a layshaft (2) which carry respective permanently meshed gears (4-7, 8,9), of which those carried by the layshaft (2) can be made fast for rotation therewith by means of respective slidable toothed engagement sleeves (10), and a reverse-gear shaft (3) carrying an idle reverse gear (14) which is slidable in order to mesh for rotation with a pinion (11) carried by the main shaft (1) and with a ring gear (12) carried by one of the toothed engagement sleeves (10) on the layshaft (2) in order to engage the idle reverse gear, characterised in that said one of the toothed engagement sleeves (10) carries, adjacent the ring gear (12), a second ring gear (13) with which the idle reverse gear (14) can mesh and which is arranged such that the idle reverse gear is constantly coupled for rotation with the layshaft (2) through one of said ring gears (12, 13).

## Patentansprüche

1. Motorfahrzeuggetriebe mit einer Hauptwelle (1) und einer Vorgelegewelle (2), die jeweils ständig in Eingriff stehende Zahnräder (4-7, 8, 9) tragen, wobei die von der Vorgelegewelle (2) getragenen Zahnräder an dieser durch jeweilige verschiebbare, gezahnte Eingriffsringe (10) für die Rotation fixiert werden, und mit einer Welle (3) für den Rückwärtsgang, die ein freilaufendes Zahnrad (14) für den Rückwärtsgang trägt, das verschiebbar ist, um mit einem von der Hauptwelle (1) getragenen Ritzel (11) und mit einem Zahnrad (12) zum Einlegen des freilaufenden Rückwärtsganges in drehenden Eingriff gebracht zu werden, wobei das Zahnrad (12) mittels eines der gezahnten Eingriffsringe (10) von der Vorgelegewelle (2) getragen wird, dadurch gekennzeichnet, daß der genannte eine der Eingriffsringe (10) neben dem Zahnrad (12) ein zweites Zahnrad (13) trägt, in das das freilaufende Zahnrad (14) für den Rückwärtsgang eingreifen kann und das so angeordnet ist, daß der freilaufende Rückwärtsgang ständig mit der Vorgelegewelle (2) durch eines der genannten Zahnräder (12, 13) in Drehverbindung steht.

## Revendications

1. Boîte de vitesses pour véhicule automobile comprenant un arbre primaire (1) et un arbre secondaire (2) qui portent des pignons respectifs (4-7, 8, 9), en prise constante, dont ceux qui sont portés par l'arbre secondaire (2) peuvent être rendus solidaires en rotation de cet arbre au moyen de manchons d'engagement dentés coulissants respectifs (10), et un arbre de marche arrière (3) qui porte un pignon fou de marche arrière (14) qui peut coulisser pour entrer en prise pour la rotation avec un pignon (11) porté par l'arbre primaire (1) et avec une couronne dentée (12) portée par l'un des manchons d'engagement dentés (10) prévus sur l'arbre secondaire (2) pour entrer en prise avec le pignon fou de marche arrière, caractérisée en ce que ledit un des manchons d'engagement dentés (10) porte, à côté de la couronne dentée (12), une deuxième couronne dentée (13) avec laquelle le pignon fou de marche arrière (14) peut engrener et qui est agencée de manière que le pignon fou de marche arrière soit constamment accouplé à l'arbre secondaire (2) pour la rotation par l'intermédiaire d'une desdites couronnes dentées (12, 13).
